Europäisches Patentamt

European Patent Office

Office européen des brevets

(11) Numéro de publication: **0 211 765**
A1

## (12) DEMANDE DE BREVET EUROPEEN

(21) Numéro de dépôt: 86401725.6

(22) Date de dépôt: 01.08.86

(51) Int. Cl.4: **H02H 7/122** , H02M 3/335

(30) Priorité: 02.08.85 FR 8511882

(43) Date de publication de la demande:
25.02.87 Bulletin 87/09

(84) Etats contractants désignés:
DE GB IT NL

(71) Demandeur: SOCIETE ELECTRONIQUE DE LA
REGION PAYS DE LOIRE
74, rue du Surmelin
F-75020 Paris(FR)

(72) Inventeur: Louvel, Jean-Paul
THOMSON - CSF SCPI 19, avenue de
Messine
F-75008 Paris(FR)

(74) Mandataire: Chaverneff, Vladimir et al
THOMSON-CSF SCPI 19, avenue de Messine
F-75008 Paris(FR)

(54) Circuits de sécurité pour alimentation à découpage.

(57) Pour protéger contre les court-circuits et les surtensions la sortie +5V d'une alimentation à découpage, on prévoit un thyristor (40) aux bornes d'un enroulement (28) fournissant une tension supérieure (+12V), ce thyristor étant amorcé lorsque la tension de sortie dépasse une certaine valeur - (Zener 46). L'amorçage du thyristor fait baisser la tension secondaire par diminution de la fréquence de découpage (transistor 9), et peut même couper l'alimentation par blocage durable du transistor découpeur grâce à la diminution de la tension d'alimentation du circuit de commande (4) du transistor découpeur.

EP 0 211 765 A1

## CIRCUITS DE SECURITE POUR ALIMENTATION A DECOUPAGE

La présente invention se rapporte à des circuits de sécurité pour alimentation à découpage.

Dans une alimentation à découpage, en particulier du type "flyback" (à récupération de l'énergie inductive du transformateur à découpage lors du blocage du transistor de découpage), le circuit de commande, placé du côté primaire du transformateur d'isolation galvanique, assure les fonctions de régulateur, d'oscillateur de commande du transistor découpeur, ainsi que certaines sécurités : contrôle et limitation du courant dans le transistor découpeur, et contrôle de la démagnétisation du transformateur. En général, ce transformateur délivre deux ou plusieurs tensions de sortie. Certains de ces enroulements peuvent être amenés à délivrer des courants pouvant subir des variations importantes, et il faut donc assurer une régulation très efficace sur les différentes tensions délivrées par le transformateur, la seule régulation amont (côté primaire du transformateur) ne suffisant pas dans de tels cas.

Le circuit de commande du transistor de découpage en assure une fonction de protection efficace en limitant son courant collecteur. Ce courant étant limité, on obtient une protection de l'alimentation en cas de court-circuit d'un enroulement secondaire, mais seulement au cas où un tel court-circuit se traduit par une forte augmentation du courant secondaire. En effet, dans certains cas, un court-circuit d'un enroulement secondaire peut se traduire, côté primaire, par une légère augmentation de la puissance consommée, l'augmentation correspondante du courant collecteur du transistor découpeur étant trop faible pour pouvoir être décelée, ce qui est aggravé par le fait que le temps de conduction de ce transistor, dans des conditions normales, est très petit par rapport à la valeur maximale qu'il peut prendre. Pour protéger les circuits reliés aux enroulements secondaires du transformateur de découpage contre des tensions trop élevées de façon classique on détecte les élévations de tension à l'aide d'un circuit à diode Zener relié par un photocoupleur au circuit de commande du transistor hacheur. En cas de surtension, le circuit à diode Zener fait passer dans la diode émettrice du photocoupleur un courant élevé, ce qui force ledit circuit de commande à faire tomber à une valeur minimale le temps de conduction du transistor découpeur, ce qui entraîne la chute de toutes les tensions secondaires du transformateur de découpage. Cependant, dans le cas d'une ouverture de la boucle de régulation telle qu'une panne du photocoupleur ou une ouverture de la liaison côté primaire, toutes les tensions secondaires augmentent de façon importante sans que se produise une quelconque limitation.

La présente invention a pour objet une alimentation à découpage du type précité évitant tout risque de dépassement de tension dans tous les circuits branchés aux enroulements secondaires du transformateur de découpage, en particulier ceux à forte consommation, et présentant une sécurité contre tous les risques de court-circuits dans lesdits circuits branchés aux enroulements secondaires du transformateur de découpage.

L'alimentation à découpage conforme à l'invention comporte, aux bornes d'un premier enroulement secondaire dont la tension est redressée et fournissant une tension supérieure à celle alimentant le circuit secondaire à protéger, le circuit anode-cathode d'un thyristor dont la gâchette est reliée d'une part par une diode Zener à l'une des bornes de sortie du circuit secondaire d'alimentation à protéger, et d'autre part par une résistance à l'autre borne de sortie dudit circuit secondaire d'alimentation.

Selon une autre caractéristique de l'invention, l'alimentation comporte un autre second enroulement secondaire relié par un circuit de redressement à une électrode du trajet émetteur-collecteur d'un transistor, l'autre électrode de ce trajet étant reliée à la gâchette dudit thyristor, la base dudit transistor étant reliée à une borne de sortie dudit circuit secondaire d'alimentation.

Selon une autre caractéristique de l'invention, un enroulement du tranformateur de l'alimentation est relié par une diode en série avec une résistance à la borne, d'alimentation en tension du circuit de commande du transistor de découpage de l'alimentation à découpage.

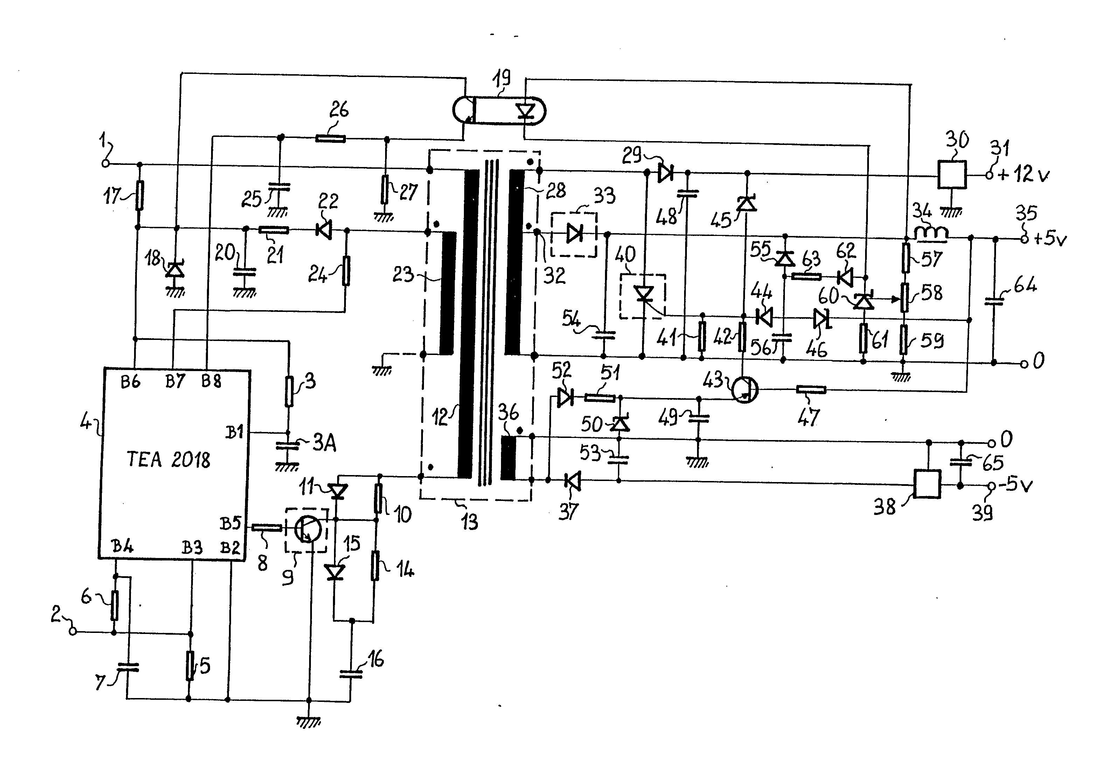

La présente invention sera mieux comprise à la lecture de la description détaillée d'un mode de réalisation pris comme exemple non limitatif et illustré par le dessin annexé dont la figure unique est un schéma électrique partiel d'une alimentation à découpage conforme à l'invention.

L'alimentation dont on a représenté une partie du schéma sur le dessin délivre des tensions de +12V, +5V et -5V, mais il est bien entendu que l'invention n'est pas limitée à un tel nombre de tensions, ni à de telles valeurs de tensions, et l'invention porte principalement sur la protection du +5V contre les surtensions et les court-circuits.

Cette alimentation à découpage comporte un circuit redresseur classique (non représenté) fournissant entre une borne 1 (positive) et une borne 2 (négative) une tension redressée et filtrée. La borne 2 est reliée à la broche B3 d'un circuit de régulation 4. qui est dans le cas présent un circuit intégré TEA 2018 à huit broches B1 à B8, mais qui pourrait être tout autre circuit de régulation équivalent. La broche B1 est reliée par une résistance 3 à la broche B6 et par un condensateur 3A à la masse. La broche B3 est reliée à la masse par une résistance 5. La borne 2 est également reliée, par une résistance 6, à la broche B4 du circuit 4, cette dernière étant reliée à la masse par un condensateur 7. Il faut toutefois noter que les liaisons entre la borne 2 et les broches B3 et B4 décrites ci-dessus ne représentent qu'une des possibilités de liaisons, et l'on se reportera pour d'autres détails à la notice d'application du circuit TEA 2018. La broche B2 du circuit 4 est reliée directement à la masse, et sa broche B1 est reliée à une tension de référence Vref appropriée, qui peut par exemple être obtenue à partir de la tension entre les bornes 1 et 2.

La borne B5 du circuit 4 est reliée par une résistance 8 à la base du transistor de découpage 9, dont l'émetteur est relié à la masse. Le collecteur du transistor 9 est relié, d'une part par un circuit parallèle formé par une résistance 10 et une diode 11, montée en sens passant, à l'enroulement primaire principal 12 du transformateur de découpage 13, et d'autre part par un circuit parallèle, formé d'une résistance 14 et d'une diode 15 montée en sens passant, en série avec un condensateur 16 à la masse. L'enroulement 12 est d'autre part directement relié à la borne 1.

La borne 1 est reliée par une résistance 17 à la broche B6 du circuit 4. Cette broche B6 est, d'une part reliée à la cathode d'une diode Zener 18 dont l'anode est reliée à la masse, et d'autre part au collecteur du phototransistor d'un photocoupleur 19. La cathode de la diode Zener 18 est reliée, d'une part par un condensateur 20 à la masse, et d'autre part par une résistance 21 à la cathode d'une diode 22 dont l'anode est reliée d'une part à l'enroulement primaire d'alimentation 23 du transformateur 13, et d'autre part, par une résistance 24, à la broche B7 du circuit 4. L'enroulement 23 est en outre relié à la masse. La broche B8 du circuit 4 est reliée à la masse par un condensateur 25, et par une résistance 26 à l'émetteur du phototransistor du photocoupleur 19, cet émetteur étant d'autre part relié à la masse par une résistance 27.

Le secondaire du transformateur 13 comporte un enroulement 28 destiné à fournir une tension de +12V. Une extrémité de l'enroulement 28 est reliée à la masse, et l'autre est reliée via une diode de redressement 29 et un régulateur 30 à une borne 31 sur laquelle on obtient une tension, de +12V dans le cas présent. La borne 31 peut être reliée à un dispositif de lissage (non représenté).

L'enroulement 28 comporte en outre une prise 32, pour la production d'une autre tension positive, de +5V dans le cas présent. La prise 32 est reliée via une diode de redressement 33, en série avec une inductance de lissage 34, à une borne 35 sur laquelle on recueille ladite tension de +5V.

Le transformateur 13 comporte un autre enroulement secondaire 36, dont une extrémité est reliée à la masse et l'autre est reliée, via une diode de redressement 37 à un régulateur 38, à une borne 39 sur laquelle on recueille une tension négative, de -5V dans le cas présent. Bien entendu, c'est la cathode de la diode 37 qui est reliée à une extrémité de l'enroulement 36, et le régulateur 38 est un régulateur de tension négative, puisque l'on doit obtenir une tension négative sur la borne 39.

En parallèle sur les extrémités de l'enroulement 28 du transformateur 13 on branche un thyristor 40 dont l'anode est reliée à l'anode de la diode 29. La gâchette du thyristor 40 est reliée, d'une part par une résistance 41 à la masse, d'autre part par une résistance 42 au collecteur d'un transistor 43 de type PNP dans le cas présent, et d'autre part à la cathode d'une diode 44 et à l'anode d'une diode Zener 45 dont la cathode est reliée à la cathode de la diode 29. L'anode de la diode 44 est reliée à l'anode d'une diode Zener 46 dont la cathode est reliée d'une part à la borne 35 et d'autre part via une résistance 47 à la base du transistor 43. La cathode de la diode 29 est reliée à la masse par un condensateur 48.

L'émetteur du transistor 43 est relié d'une part par un condensateur 49 en parallèle avec une diode Zener 50 à la masse, l'anode de la diode 50 étant côté masse, d'autre part par une résistance 51 à la cathode d'une diode 52 dont l'anode est reliée à la cathode de la diode 37, dont l'anode est reliée à la masse par un condensateur 53.

La cathode de la diode 33 est reliée à la masse par trois circuits en parallèle : le premier comporte simplement un condensateur 54, le second une diode 55 en série avec un condensateur 56, la cathode de la diode 55 étant du côté de la cathode de la diode 33, et le troisième est un circuit série comportant respectivement une résistance 57, le circuit principal d'un potentiomètre 58, et une résistance 59. Le curseur du potentiomètre 58 est relié à l'électrode de commande d'une diode Zener programmable 60 dont l'anode est reliée à la masse par une résistance 61, et dont la cathode est reliée d'une part à l'anode d'une diode 62 dont la cathode est reliée par une résistance 63 à l'anode de la diode 55, et d'autre part à la cathode de la diode émettrice du photocoupleur 19 dont l'anode est reliée à la cathode de la diode 33. La borne 35 est reliée à la masse par un condensateur 64, et la borne 39 est reliée à la masse par un condensateur 65.

Le fonctionnement normal de l'alimentation décrite ci-dessus, et en particulier du circuit de commande 4, étant bien connu en soi, ne sera par décrit. On ne décrira que le fonctionnement des circuits anti-surtensions et de protection faisant l'objet de l'invention.

On va maintenant décrire le fonctionnement du circuit de protection contre les surtensions du +5V, en supposant que le photocoupleur 19 est en panne, et sans tenir compte de la résistance 21. Une surtension apparaissant sur la borne 35 provoque la conduction inverse de la diode Zener 46, dont la tension Zener est d'environ 5V (valeur normalisée de 5,1V dans le cas présent). Le courant qui passe ainsi dans la diode 46, passe en particulier par la résistance 41, et crée aux bornes de cette résistance une différence de potentiel suffisante pour amorcer le thyristor 40. La mise en conduction du thyristor 40 équivaut à un court-circuit aux bornes de l'enroulement 28 qui sert à produire le +12V. Ce court-circuit est vu, du côté de l'enroulement primaire 12 comme une augmentation de puissance à fournir, ce qui entraîne l'augmentation du courant collecteur du transistor 9 jusqu'à sa valeur maximale permise par le circuit 4. Le circuit de commande 4 détecte l'arrivée à cette valeur maximale et bloque le transistor 9. Le transformateur 13 n'est alors plus alimenté, et l'enroulement 28 restitue son énergie (courant de démagnétisation).

Le circuit 4, par sa borne de contrôle de démagnétisation B7, reliée à l'enroulement primaire 23, dans lequel le courant de démagnétisation induit un courant, détermine la fin du passage du courant de démagnétisation. Cette fin est déterminée par une tension passant en-dessous de 0,1V sur la broche B7 du circuit 4, le courant de démagnétisation ayant circulé pendant un temps T1, durant lequel le circuit 4 garde bloqué le transistor 9. Au bout du temps T1, le transistor 9 est débloqué, et son courant collecteur recommence à croître jusqu'à sa valeur maximale, détectée par le circuit 4 qui le rebloque alors, et le processus décrit ci-dessus recommence, et ce, tant que persiste la cause de ce fonctionnement, c'est-à-dire la surtension sur la borne 35. On obtient ainsi un fonctionnement de l'alimentation à fréquence plus basse qu'en régime normal, (T1 est égal à 3 ou 4 périodes de fonctionnement normal car la démagnétisation est beaucoup plus lente), ce qui diminue la puissance moyenne à dissiper dans les éléments des circuits de l'alimentation, en particulier des éléments du circuit primaire, et en premier lieu le transistor de découpage 9.

On va maintenant examiner le fonctionnement en cas de court-circuit sur le +5V. On a écarté la solution simpliste de l'utilisation d'un fusible qui nécessite généralement un courant relativement élevé pour fondre (on ne peut pas, bien entendu choisir un fusible dont le courant de rupture serait légèrement supérieur au courant maximal admis sur le circuit de +5V, puisqu'il risquerait, eu égard aux tolérances de fabrication en particulier, de fondre à la moindre surintensité passagère, par exemple au démarrage), et qui, lorsqu'il fond, nécessite une intervention.

On a également écarté la solution de la mesure d'un courant à travers une résistance pour y provoquer une chute de tension d'environ 0,5V et débloquer en cas de court-circuit un transistor actionnant une sécurité, la puissance dissipée en permanence (en régime normal) dans une telle résistance étant généralement beaucoup trop importante car l'alimentation est surtout prévue pour délivrer de fortes intensités (plusieurs ampères) sur le +5V. Pour diminuer la chute de tension normale aux bornes de la résistance, on pourrait pré-polariser le transistor de sécurité avec une tension obtenue aux bornes d'une diode Zener reliée à +12V, mais une telle solution n'est pas non plus satisfaisante. En effet, en cas de court-circuit sur le +5V à la mise sous tension de l'alimentation, on n'obtiendrait aucune tension au secondaire +12 ou +5V, et l'on ne pourrait donc faire fonctionner ni le transistor de sécurité, ni un circuit de protection du type de photocoupleur et diode Zener tel que celui mentionné ci-dessus en préambule, qui est d'ailleurs prévu contre les surtensions.

Par conséquent, pour assurer la protection de l'alimentation en cas de court-circuit du +5V, l'invention prévoit des circuits de sécurité permettant d'amorcer le thyristor 40 aussi bien à la mise sous tension de l'alimentation qu'à tout moment de son fonctionnement, cet amorçage provoquant le blocage du transistor 9, qui reste bloqué tant que persiste le court-circuit, et qui peut être automatiquement débloqué dès que disparaît le court-circuit. Ces circuits de sécurité comportent essentiellement le transistor 43 d'une part, et la résistance 21 d'autre part.

L'émetteur du transistor 43 est porté en permanence à un potentiel déterminé par le redressement, en régime "forward" (pendant les temps de conduction du transistor 9), de la tension de l'enroulement 36. Cet enroulement 36, destiné à produire le -5V, est un enroulement secondaire du transformateur 13, et on otbient donc à ses bornes, et ce dès la mise sous tension de l'alimentation, une tension alternative tant que le circuit de commande 4 envoie des signaux de commande sur la base du transistor 9 (c'est-à-dire tant qu'il n'est pas durablement bloqué). En régime "flyback", c'est-à-dire en régime de transfert de l'énergie au secondaire, les alternances négatives de la tension aux bornes de l'enroulement 36 sont redressées par la diode 37 (qui est bien entendu, branchée sur l'extrémité adéquate de l'enroulement 36), filtrées par le condensateur 53, et régulées par le régulateur série 38, pour produire le -5V sur la borne 39. En régime "forward", pendant les périodes de conduction du transistor 9, la tension de démagnétisation de l'enroulement 36 est redressé par la diode 52 et filtré par la cellule R-C comportant les éléments 51, 49. La tension résultante aux bornes du condensateur 49 est limitée par la diode Zener 50, dont la tension de Zener est légèrement supérieure (d'environ 0,5V) à celle de la diode 46, et dans le cas présent égale à 5,6V. Ainsi, le transistor 43, dont la base est reliée par la résistance 47 à la borne 35, est bloqué en régime normal, c'est-à-dire tant que la borne 35 est à un potentiel d'au moins +5V. Dès qu'il y a court-circuit sur le +5V, le potentiel de la borne 35, donc celui de la base du transistor 43, s'annule, et le transistor 43 devient passant. L'enroulement 36 continuant à fournir une tension alternative à ses bornes, un courant d'émetteur passe par le transistor 43, et les résistances 42 et 41. La tension ainsi produite aux bornes de la résistance 41 amorce le thyristor 40, et on revient au cas exposé ci-dessus pour les surtensions sur le +5V.

Comme décrit ci-dessus, l'amorçage du thyristor 40 n'entraîne pas le blocage durable du transistor 9, mais seulement le ralentissement de son fonctionnement. Grâce à une autre caractéristique de l'invention, selon laquelle on intercale la résistance 21, d'une valeur de quelques ohms (4,7 ohms dans le cas présent) dans la ligne d'alimentation positive du circuit 4, on obtient ce blocage durable. En effet, la tension aux bornes de l'enroulement 23 est telle qu'en fonctionnement normal la chute de tension produite par la résistance 21 permette d'obtenir sur la broche B6 d'alimentation du circuit 4 une tension d'alimentation nominale, limitée par la diode Zener 18, dont la tension de Zener, de 7,5V dans le cas présent, est égale à cette tension nominale. Lorsque le thyristor 40 est amorcé, la diminution de puissance fournie au transformateur 13, par suite de l'allongement de la période de démagnétisation comme décrit ci-dessus, fait chuter la tension aux bornes de l'enroulement 23, ce qui fait chuter grâce à la résistance 21 la tension aux bornes du condensateur 20 en-dessous de la valeur minimale d'alimentation (seuil bas de l'hystérésis de la caractéristique d'alimentation) du circuit 4, ce qui bloque le transistor 9, et arrête le fonctionnement de l'alimentation.

La tension secteur redressée étant toujours appliquée sûr la borne 1, on a alors un fonctionnement analogue à celui du démarrage de l'alimentation : cette tension redressée charge le condensateur 20 à travers la résistance 17, qui est de valeur élevée, par exemple 120 kilohms. Lorsque la tension aux bornes du condensateur 20 remonte jusqu'à une valeur permettant le fonctionnement du circuit 4 (seuil haut de l'hystéréris), celui-ci débloque le transistor 9 pour un nouveau processus de démarrage de l'alimentation. Si la cause de l'amorçage du thyristor 40 persiste, le processus de blocage du transistor 9 décrit ci-dessus recommence, sinon l'alimentation se met à fonctionner normalement.

Bien entendu, en fonctionnement normal, la régulation de la tension de sortie +5V est d'abord assurée par le photocoupleur 19. Une fraction de la tension de sortie est prélevée entre le curseur du potentiomètre 58 et la masse pour servir de tension de commande de la Zener programmable 60. Cette tension de commande est avantageusement de 2,5V. Ainsi, la diode 60 agit à la manière d'un transistor, et fait passer dans la diode émettrice du photocoupleur 19 un courant qui est fonction de la tension entre la borne 35 et la masse. Le phototransistor du photocoupleur 19 agit en conséquence sur la broche B8 du circuit 4. La régulation des tensions +12V et -5V est assurée par les régulateurs série 30 et 38 respectivement, qui sont autoprotégés. Bien entendu, si l'on voulait prévoir des sécurités supplémentaires sur ces deux tensions, on rajouterait des circuits de protection similaires à ceux équipent le +5V, qui nécessiteraient des enroulements auxiliaires supplémentaires du transformateur 13.

Une autre sécurité est assurée par la diode Zener 45. Si la diode 33 venait à être coupée, la diode émettrice du photocoupleur ne serait plus alimentée, et la broche 38 du circuit 4 ne recevrait plus de signal. Le circuit 4 agirait alors sur le transistor 9 de façon à augmenter les tensions secondaires, car le circuit 4 considère une tension insuffisante ou nulle sur sa broche B8 comme une soustension au secondaire et cherche à la compenser en agissant corrélativement sur le transistor 9. Etant donné qu'alors les circuits de sécurité du +5V seraient inopérants du fait de la coupure de la diode 33, la tension aux bornes de l'enroulement 28 augmenterait sans arrêt. Grâce à la diode Zener 45, cette augmentation serait limitée à sa tension de Zener, qui est dans le cas présent de 27V. Dès que cette tension de Zener serait atteinte, un courant passerait par la diode 45 et la résistance 41, ce qui amorcerait le thyristor 40, et l'on aurait le même processus que décrit ci-dessus pour la protection du +5V.

L'intérêt du dispositif décrit ci-dessus réside, entre autres, dans le fait que la sécurité qu'il assure, qui est du deuxième ordre (sécurité complète avec remise en fonctionnement normal après suppression du ou des incidents) s'appuie sur, et accentue, la chute de tension de l'alimentation du circuit de commande 4 pour bloquer le transistor 9 et interrompre tout transfert d'énergie aussi longtemps que dure l'incident.

## Revendications

1. Circuit de sécurité vis-à-vis des court-circuits et des surtensions pouvant se produire aux bornes d'au moins un circuit secondaire (35) d'alimentation pour alimentation à découpage comportant un circuit de commande (4) placé du côté du primaire du transformateur d'isolation galvanique - (13) et assurant les fonctions de régulation, d'oscillateur de commande du transistor découpeur (9), ainsi que le contrôle et la limitation du courant dans le transistor découpeur, et le contrôle de la démagnétisation du transformateur, caractérisé par le fait qu'il comporte aux bornes d'un premier enroulement secondaire (28) dont la tension est redressée (29, 48), et fournissant une tension supérieure à celle (32) alimentant le circuit secondaire (35) à protéger, le circuit anode-cathode d'un thyristor (40) dont la gâchette est reliée d'une part par une diode Zener (46) à l'une des bornes de sortie (35) dudit circuit secondaire d'alimentation, et d'autre part par une résistance (41) à l'autre borne de sortie (0) de ce circuit secondaire.

2. Circuit de sécurité selon la revendication 1, caractérisé par le fait qu'il comporte un second enroulement secondaire (36) relié par un circuit de redressement (52, 51, 49) à une électrode - (émetteur) du trajet émetteur-collecteur d'un transistor (43), l'autre électrode de ce trajet (collecteur) étant reliée à la gâchette dudit thyristor, la base dudit transistor étant reliée à une borne de sortie (35) dudit circuit secondaire d'alimentation.

3. Circuit de sécurité selon l'une des revendications 1 ou 2, caractérisé par le fait qu'un enroulement (23) du transformateur de l'alimentation est relié par une diode (22) en série avec une résisance (21) à une borne d'alimentation en tension (B6) du circuit de commande (4) du transistor de découpage (9).

4. Circuit de sécurité selon l'une des revendications précédentes, caractérisé par le fait que l'on relie la sortie redressée (29, 48) dudit premier enroulement secondaire par une diode Zener (45), dont la tension de Zener est supérieure à la valeur de la tension redressée de cet enroulement, à la gâchette dudit thyristor (40).

## DOCUMENTS CONSIDERES COMME PERTINENTS

| Catégorie | Citation du document avec indication, en cas de besoin. des parties pertinentes | Revendication concernée | CLASSEMENT DE LA DEMANDE (int Ci 4) |
|---|---|---|---|
| X | US-A-4 037 271 (KELLER)<br>* Figure 3; colonne 5, ligne 61 - colonne 6, ligne 10 * | 1,4 | H 02 H 7/122<br>H 02 M 3/335 |
| | --- | | |
| X | FR-A-2 298 898 (LES MODELES FRANCAIS)<br>* Figure 1; page 4, ligne 39 - page 5, ligne 11 * | 1,4 | |
| | --- | | |
| A | GB-A-2 031 623 (SIEMENS)<br>* Figure; page 1, lignes 87-94 * | 1,4 | |
| | --- | | |
| A | FR-A-2 180 071 (PHILIPS)<br>* Figure 1; revendication 1 * | 1,4 | |
| | ----- | | |

|  |
|---|
| DOMAINES TECHNIQUES RECHERCHES (Int. Cl.4) |
| H 02 H<br>H 02 M |

Le présent rapport de recherche a été établi pour toutes les revendications

| Lieu de la recherche | Date d'achevement de la recherche | Examinateur |
|---|---|---|
| LA HAYE | 17-10-1986 | KOLBE W.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant